# EUROPÄISCHE PATENTSCHRIFT

(11) **EP 2 577 080 B1**
(45) Veröffentlichungstag und Bekanntmachung des Hinweises auf die Patenterteilung: **02.12.2015**
(21) Anmeldenummer: 11722452.7
(22) Anmeldetag: 31.05.2011
(51) Int. Cl.: F16C 25/08, F16C 19/16, F16C 33/30, F16C 33/62, G01M 13/04

(54) **VERFAHREN UND VORRICHTUNG ZUR ANPASSUNG DES LAGERSPIELS BEI EINEM KERAMIK-HYBRID-LAGER**
METHOD AND DEVICE FOR ADJUSTING THE BEARING PLAY IN A CERAMIC HYBRID BEARING
PROCÉDÉ ET DISPOSITIF PERMETTANT D'ADAPTER LE JEU D'UN PALIER CÉRAMIQUE HYBRIDE

(30) Priorität: 04.06.2010 DE 102010022643
(43) Veröffentlichungstag der Anmeldung: 10.04.2013
(73) Patentinhaber: Rolls-Royce Deutschland Ltd & Co KG, 15827 Blankenfelde-Mahlow (DE)
(72) Erfinder: LÜCK, Rudolf, 14558 Nuthetal (DE); SCHOENICKE, Anika, 22143 Hamburg (DE)
(86) Internationale Anmeldenummer: PCT/EP2011/058972
(87) Internationale Veröffentlichungsnummer: WO 2011/151339

(56) Entgegenhaltungen:
- EP-A1- 1 635 079
- EP-A1- 2 110 569
- EP-A1- 2 128 465
- EP-A2- 1 134 443
- DE-A1- 10 136 438
- US-A- 2 922 681

## Beschreibung

Die Erfindung bezieht sich auf ein Verfahren und eine Vorrichtung zur Anpassung des Lagerspiels bei einem Keramik-Hybrid-Lager mit Wälzkörpern in Form von Kugeln oder Rollen aus Keramik und mit einer äußeren und/oder einer inneren Lagerschale aus ferromagnetischem Material.

Bei Keramik-Hybrid-Lagern handelt es sich um Lager, deren Wälzkörper in Form von Kugeln oder Rollen aus einer Keramik gefertigt sind, wohingegen die äußere und/oder innere Lagerschale aus ferromagnetischem Material, insbesondere üblichem Lagerstahl, bestehen. Um einen optimalen Betrieb eines solchen Keramik-Hybrid-Lagers zu gewährleisten, muss ständig ein spezielles, vorbestimmtes Lagerspiel vorhanden sein.

Aus EP 1 134 443 B1 und der parallelen US 6,508,592 B1 ist eine Vorrichtung zum Messen und Einstellen der Vorspannung in einem Lager vorbekannt. Diese Vorrichtung dient dem Zweck, die Vorspannkraft in einem Lager zu messen und zu justieren. Dafür werden zwei Ringelemente über piezoelektrische oder magnetostriktive Elemente miteinander verbunden. Eines der Ringelemente drückt axial auf den äußeren Lagerring und verschiebt diesen über ein Steuersystem mit Rückkopplung in eine bestimmte Position.

Aus der DE 10 2004 042 316 A1 sind eine Spindellagervorrichtung und ein entsprechendes Lagerverfahren bekannt.Die hier beschriebene Spindellagervorrichtung beruht auf aktiven Stellelementen. Es handelt sich dabei um piezoelektrische oder magnetostriktive Aktoren, welche die Drehachse zu jeder Zeit auf die physikalische Hauptträgheitsachse zwingen, so dass es zu möglichst geringen Wechselkräften auf das Lager kommt.

Aus US 2006/0023985 A1 ist eine adaptive Lagervorrichtung bekannt, die einen piezoelektrischen Aktuator zur Steuerung im Abstand voneinander angeordneter Lager enthält, bei denen es sich speziell um Schrägwälzlager handelt. Ein piezoelektrischer Aktuator ist dazu so neben der äußeren Lagerschale des Lagers angesetzt, dass sich die äußere Lagerschale parallel zur Welle verschieben kann. Weil es sich um Schrägwälzlager handelt, kann somit das Lagerspiel verändert werden.

Diese bekannten Vorrichtungen bieten nicht die Möglichkeit, das Lagerspiel während des Betriebes anzupassen.

EP 2 110 569 A1 offenbart ein Verfahren und eine Vorrichtung gemäß dem Oberbegriff des Anspruchs 1 bzw. 5.

Der Erfindung liegt von daher die Aufgabe zugrunde, das Lagerspiel zwischen der nicht rotierenden Lagerschale und den Wälzkörpern in Form von Kugeln oder Rollen bei Keramik-Hybrid-Lagern kontinuierlich während des Betriebs in verbesserter Weise anzupassen.

Zur Lösung dieser Aufgabe sieht die Erfindung vor, dass in eine Außenseite der feststehenden Lagerschale ein magnetischer Fluss eingeleitet und an der radial gegenüberliegenden Außenseite der Lagerschale wieder abgeleitet wird, wobei ein magnetisches Feld und ein zugehöriger magnetischer Fluss ausgebildet werden, und dass aufgrund der resultierenden magnetostriktiven Wirkung durch eine Änderung des magnetischen Flusses eine Verformung der Lagerschale im Sinne einer Verkleinerung oder Vergrößerung des Umfanges der Lagerschale herbeigeführt wird. Erfindungsgemäß kann somit das Lagerspiel zwischen der nicht rotierenden Lagerschale und den Wälzkörpern in Form von Kugeln oder Rollen bei Keramik-Hybrid-Lagern kontinuierlich während des Betriebes angepasst werden.

Die nicht rotierende Lagerschale bzw. der nicht rotierende Lagerring besteht aus einem ferromagnetischen Material durch den ein magnetischer Fluss geleitet wird. Auf Grund des magnetostriktiven Effekts lässt sich durch eine Änderung des magnetischen Flusses eine Verformung der Lagerschale bzw. des Lagerrings herbeiführen, also eine Verkleinerung oder Vergrößerung des Umfanges. Das gewünschte Lagerspiel kann somit eingestellt werden.

Der magnetostriktive Effekt beschreibt das Verhalten des ferromagnetischen Materials der nicht rotierenden Lagerschale, die mit einem magnetischen Fluss beaufschlagt wird. Die sogenannten Weiss'schen Bezirke richten sich beim Anlegen oder einer Veränderung des magnetischen Feldes in Richtung des magnetischen Flusses aus. Dies führt zu einer Längenänderung des ferromagnetischen Materials, die abhängig von der Stärke des magnetischen Feldes ist.

Die Erfindung behandelt die Lagerspielanpassung bei einem Keramik-Hybrid-Lager mit einer ferromagnetischen Lagerschale und einem Wälzkörper aus Keramik in der Form von Kugeln der Rollen. Bei Lagerkugeln ist zu beachten, dass diese nur Berührungslinien in Umfangsrichtung der Lagerschalen aufweisen. Je nach Lageraslegung gibt es drei oder vier Berührungslinien.

Bei Wälzlagern erfolgt die Anwendung der Magnetostriktion ebenfalls immer auf die ruhende Lagerschale, d. h. bei einer auf der drehenden Welle sitzenden inneren Lagerschale auf die äußere Lagerschale, und bei einer in einer drehenden Welle sitzenden äußeren Lagerschale auf die ruhende innere Lagerschale.

Mit der vorliegenden Erfindung werden beispielhaft zwei Ausführungsformen vorgestellt, die den Verlauf des magnetischen Flusses im Lager beschreiben.

In der ersten Ausführungsform wird der magnetische Fluss radial zur Lagerschale eingeleitet und umschließt diese von zwei Seiten her in Umfangsrichtung, d. h. der magnetische Fluss wird an einer Seite der äußeren Lagerschale eingeleitet und an der radial gegenüberliegenden Seite der Lagerschale bzw. der Welle wieder abgeleitet. Es bilden sich ein magnetisches Feld und ein dementsprechenderer magnetischer Fluss aus, der - in zwei Magnetflüsse aufgeteilt - von zwei Seiten her die Lagerschale bzw. den Lagerring umschließt.

In der zweiten Ausführungsform wird der magnetische Fluss axial zur Lagerschale eingeleitet und durchdringt die Lagerschale axial. Hierbei besteht die Möglichkeit bei der Verwendung von Kugeln im Lager einen magnetischen Fluss axial zum Lagerring einzubringen. Der magnetische Fluss führt je nach eingebrachter Stärke zur Erweiterung oder Verengung des Lagerschalenprofils und führt somit über die Veränderung der Auflagepunkte bzw. Berührungslinien der Kugeln ebenfalls zu einer Änderung des Lagerspiels.

Ebenso kann über die magnetostriktive Aktuation eine zyklische Verstellung auf die Lagerschale, insbesondere den feststehenden Lagerring des Lagers, durch Einbringen einer Vibration in das Lager aufgebracht werden, um die Kugeln oder Rollen aus Keramik auf diese Weise akustisch prüfen zu können. Dabei wird der Lagerring maximal geöffnet und mit zyklischen Anregungssignalen über typische Testfrequenzen der Kugeln durchgestimmt. Geprüft werden dabei die im Lagerring oben liegenden Kugeln die in dieser Situation weitgehend lastfrei sein müssen.

Die Erfindung ermöglicht somit die kontinuierliche Einstellung des Lagerspiels. Es können damit stabilere Betriebspunkte erreicht werden, wie z. B. Dreipunktkontakt in Kugellagern, Verhindern von Kantenläufern u. dgl.. Ungünstige Druckverhältnisse und somit auch verlustbehaftete Reibung können so gut wie möglich unterbunden werden. Temperatur- und lastbedingte bzw. verschleißbedingte Effekte können ausgeglichen werden. Die Überprüfung der Keramikkugeln auf grobe Fehler erfolgt im Stillstand des Triebwerks.

Mittels des erfindungsgemäßen Verfahrens ist eine Überprüfung der Keramikkugeln auf grobe Beschädigungen hin möglich. Weiterhin ist über eine zyklische, gegenphasige Verstellung zweier gegenüberliegender Seiten der Lagerringe eine Schwingungsisolation der im Lager gelagerten Welle möglich.

Die Erfindung ist nachfolgend anhand von drei Ausführungsformen der erfindungsgemäßen Vorrichtung zur Anpassung des Lagerspiels durch Magnetostriktion bei einem Keramik-Hybrid-Lager mit Kugeln aus Keramik und mit inneren und/oder äußeren Lagerschalen aus einem ferromagnetischen Material näher erläutert. Es zeigt:
- Fig. 1: die Ansicht eines Keramik-Hybrid-Lagers mit einer Vorrichtung zur Lagerspielverstellung durch Magnetostriktion in der ersten Ausführungsform,
- Fig. 2: die Ansicht eines Keramik-Hybrid-Lagers mit einer Vorrichtung zur Lagerspielverstellung durch Magnetostriktion in der zweiten Ausführungsform,
- Fig. 3: einen Schnitt gemäß der Linie III- III in Fig. 2 und
- Fig. 4: eine Prinzipdarstellung der dritten Ausführungsform.

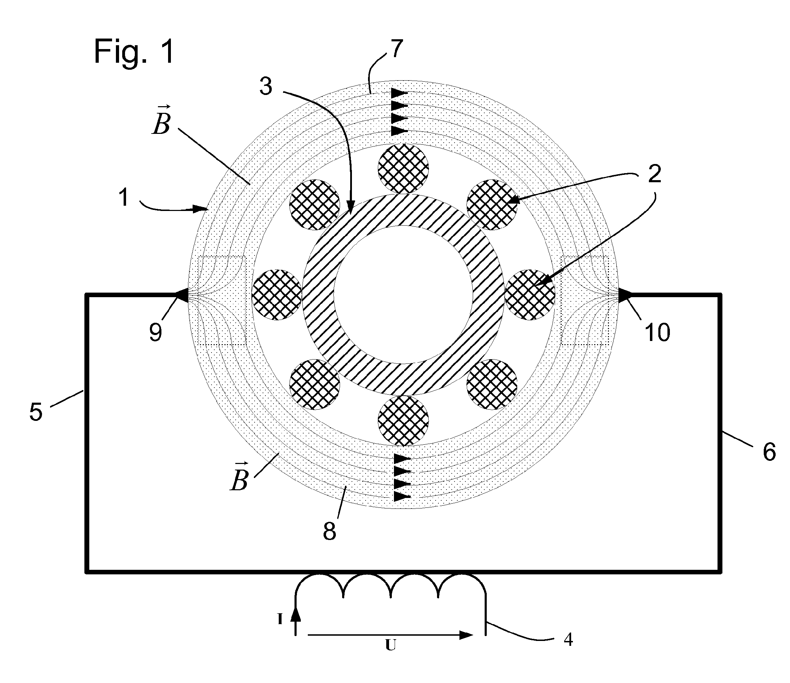

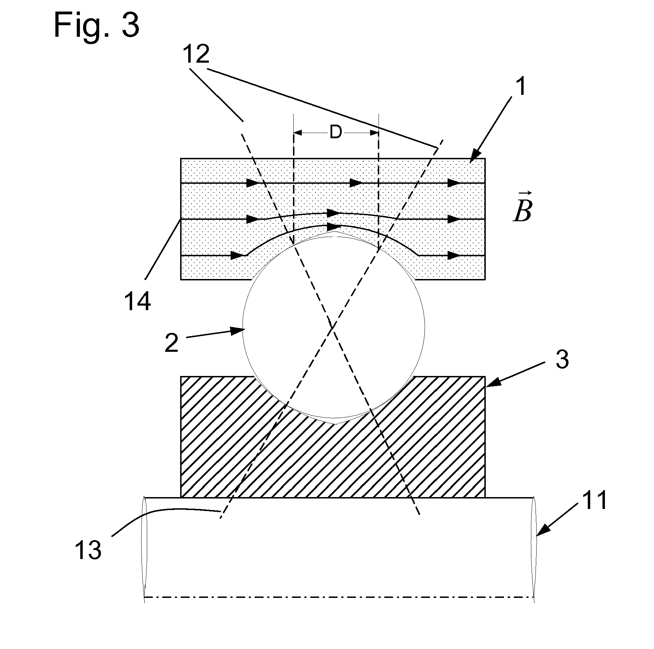

Das in Fig. 1 in Ansicht gezeigte Keramik-Hybrid-Lager besteht gemäß der ersten Ausführungsform der Erfindung aus einer, in einem nicht dargestellten Gehäuse fest gelagerten äußeren Lagerschale 1 (Lageraußenring) aus ferromagnetischem Material, insbesondere Stahl, einer Mehrzahl von als Wälzkörper dienenden Kugeln 2 aus einer Keramik und aus einer, mit einer nicht dargestellten Welle umlaufenden inneren Lagerschale 3 (Lagerinnenring) aus ferromagnetischem Material, insbesondere Stahl. Die Kugeln 2 des Lagers weisen - wie es anhand der Fig. 3 noch näher erläutert werden wird - nur Berührungslinien in Umfangsrichtung beider Lagerschalen 1, 3 auf.

Mittels einer Spule 4, deren Spannungs- und Strompfade U bzw. I gezeigt sind und die über elektrische Leitungen 5, 6 an radial gegenüberliegenden Stellen mit dem äußeren Umfang der äußeren Lagerschale 1 verbunden ist, wird ein Magnetfeld B in der äußeren Lagerschale 1 erzeugt, das in der äußeren Lagerschale 1 als magnetischer Fluss gemäß den Pfeilen 7, 8 vom Anschlusspunkt 9 der Leitung 5 an der in Fig. 1 linken Seite der äußeren Lagerschale 1 zum Anschlusspunkt 10 der Leitung 6 an der in Fig. 1 rechten Seite der äußeren Lagerschale 1 verläuft. Der gemäß den Pfeilen 7, 8 fließende magnetische Fluss wird somit an einer Seite der äußeren Lagerschale 1 eingeleitet und an der gegenüberliegenden Seite der äußeren Lagerschale 1 und damit der nicht gezeigten Welle wieder abgeleitet. Es bildet sich somit das magnetische Feld B und ein dementsprechender magnetischer Fluss gemäß den Pfeilen 7, 8 aus, der aufgeteilt in zwei Magnetflüsse die äußere Lagerschale 1 von zwei Seiten her umschließt.

Auf Grund des aus dem magnetischen Fluss B resultierenden magnetostriktiven Effekts lässt sich durch eine Änderung des magnetischen Flusses B eine Verformung des inneren Umfanges der äußeren Lagerschale 1 (Lageraußenring) und damit eine Verkleinerung oder Vergrößerung des Durchmessers der Berührungslinien der Kugeln 2 herbeiführen. Das gewünschte Lagerspiel kann somit eingestellt werden.

Der magnetostriktive Effekt beschreibt das Verhalten eines ferromagnetischen Materials, das mit einem magnetischen Fluss beaufschlagt wird. Die sogenannten Weiss' schen Bezirke richten sich beim Anlegen oder einer Veränderung des magnetischen Feldes in Richtung des magnetischen Flusses aus. Dies führt zu einer Längenänderung des ferromagnetischen Materials, die abhängig von der Stärke des magnetischen Feldes B ist.

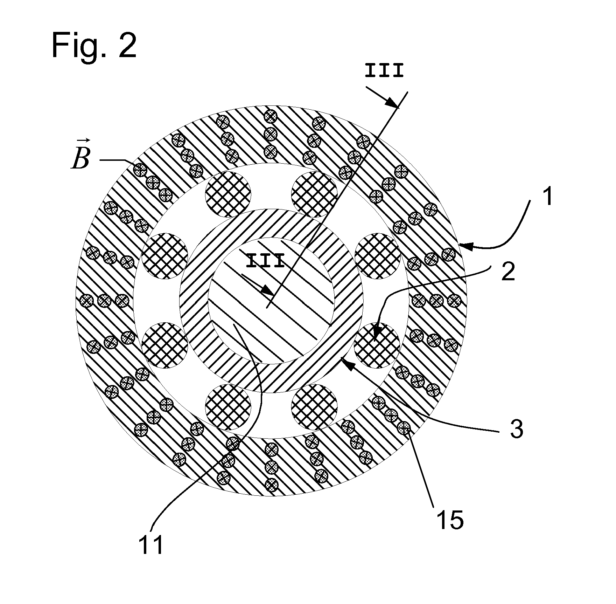

Das in Fig. 2 in Ansicht und in Fig. 3 im Schnitt gemäß der Linie III-III in Fig. 2 gezeigte Keramik-Hybrid-Lager gemäß der zweiten Ausführungsform der Erfindung besteht wiederum aus einer, in einem nicht dargestellten Gehäuse fest gelagerten äußeren Lagerschale 1 (Lageraußenring) aus ferromagnetischem Material, insbesondere Stahl, einer Mehrzahl von als Wälzkörper dienenden Kugeln 2 aus einer Keramik und aus einer, mit einer Welle 11 umlaufenden, inneren Lagerschale 3 (Lagerinnenring) aus ferromagnetischem Material, insbesondere Stahl. Die Kugeln 2 des Lagers weisen bei der Ausführung als Vierpunktauflager sowohl mit der äußeren Lagerschale 1 als auch mit der inneren Lagerschale 3 jeweils zwei Berührungslinien 12, 13 in Umfangsrichtung beider Lagerschalen 1, 3 auf. Es sind desweiteren Ausführungen als Dreipunktauflager möglich. Dann muss der aktivierte Lagerring die Zweipunktaufnahme beinhalten.

Im Unterschied zu der in der Fig. 1 dargestellten ersten Ausführungsform wird bei der zweiten Ausführungsform der magnetische Fluss B gemäß den Pfeilen 14 in Fig. 3 und den gekreuzten Kreisen 15 in Fig. 2 axial zur äußeren Lagerschale 1 eingebracht, wozu ähnlich wie bei der ersten Ausführungsform nicht gezeigte Spulen und Leitungen verwendet werden. Der magnetische Fluss führt - je nach eingebrachter Stärke - zur Erweiterung oder Verengung des Profils der äußeren Lagerschale 1 und führt somit über eine Veränderung der Auflagepunkte bzw. Berührungslinien 12 der Kugeln 2 ebenfalls zu einer Änderung des Lagerspiels. Dies wird in Fig. 3 durch die Darstellung der Breite D zwischen den Berührungslinien 14 der Kugeln 2 gezeigt. Durch eine Veränderung der Breite D werden die Auflagefläche der Kugeln 2 und damit der resultierende Durchmesser der äußeren Lagerschale 1 (Lageraußenring) und damit das Lagerspiel verstellt.

Wie es bereits zur ersten Ausführungsform gemäß Fig. 1 erläutert wurde, lässt sich aufgrund des aus dem magnetischen Fluss B resultierenden magnetostriktiven Effekts durch eine Änderung des magnetischen Flusses B eine Verformung des inneren Umfanges der äußeren Lagerschale 1 (Lageraußenring) und damit eine Verkleinerung oder Vergrößerung des Durchmessers der Berührungslinien 14 der Kugeln bzw. der Breite D zwischen den Berührungslinien 14 herbeiführen. Das gewünschte Lagerspiel kann somit eingestellt werden.

Der magnetostriktive Effekt wurde bereits in Verbindung mit der ersten Ausführungsform nach Fig. 1 erläutert.

Mit der Erfindung ist weiterhin eine zyklische Verstellung von jeweils gegenüber liegenden Lagerschalenbereichen denkbar, z.B. bei einem Quereintrag der Feldlinien in die Lagerschale 1, wie es in Fig. 2 und 3 dargestellt ist. Damit ist eine Schwingungsisolation der gelagerten Welle möglich, d. h. Schwingungseinträge über die Rotorwelle können somit im Eintrag der Amplitude reduziert werden. Über die Aktuierung in der Phase mit der Vibration wird die Aufhängung "weicher".

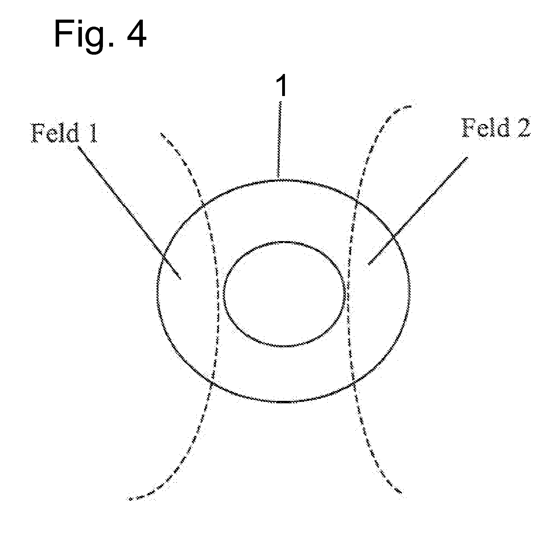

Technisch wird dies dadurch implementiert, dass - wie es in Fig. 4 dargestellt ist - Feld 1 und Feld 2 von jeweils separaten Spulen erzeugt werden. Die magnetischen Felder bzw. der magnetische Fluss werden in der Art wechselseitig eingebracht, dass sich über diese Art der Aktuierung der Mittelpunkt des Lagers zyklisch verschiebt. Die Beschaffenheit der magnetischen Felder , d. h. Feld 1 und Feld 2 in Fig. 4, auf den gegenüberliegenden Seiten der Lagerschale 1 muss in der Geometrie und Stärke derart gestaltet sein, dass die Lagerschale 1 im Ergebnis immer eine Kreisform behält.

### Bezugszeichenliste

- 1: äußere Lagerschale (Lageraußenring
- 2: Kugel
- 3: innere Lagerschale (Lagerinnenring)
- 4: Spule
- 5: elektrische Leitung
- 6: elektrische Leitung
- 7: Pfeil (magnetischer Fluss)
- 8: Pfeil (magnetischer Fluss)
- 9: Anschlusspunkt
- 10: Anschlusspunkt
- 11: Welle
- 12: Berührungslinie
- 13: Berührungslinie
- 14: Pfeil (magnetischer Fluss)
- 15: gekreuzter Kreis (magnetischer Fluss)

## Patentansprüche

1. Verfahren zur Anpassung des Lagerspiels bei einem Keramik-Hybrid-Lager mit Wälzkörpern (2) in Form von Kugeln oder Rollen aus einer Keramik und mit einer äußeren (1) und einer inneren (3) Lagerschale aus ferromagnetischem Material,
**dadurch gekennzeichnet,**
**dass** in eine Außenseite der feststehenden, nicht drehenden Lagerschale (1) ein magnetischer Fluss eingeleitet und an der gegenüberliegenden Außenseite der Lagerschale (1) wieder abgeleitet wird, wobei ein magnetisches Feld und ein zugehöriger magnetischer Fluss ausgebildet werden, und
**dass** aufgrund der resultierenden magnetostriktiven Wirkung durch eine Änderung des magnetischen Flusses eine Verformung der Lagerschale (1) im Sinne einer Verkleinerung oder Vergrößerung des Umfanges der Lagerschale (1) herbeigeführt wird.

2. Verfahren nach Anspruch 1, **dadurch gekennzeichnet, dass** der magnetische Fluss radial zur Lagerschale (1) eingeleitet wird und die Lagerschale (1) von zwei Seiten her in Umfangsrichtung umschließt.

3. Verfahren nach Anspruch 1, **dadurch gekennzeichnet, dass** der magnetische Fluss axial zur Lagerschale (1) eingeleitet wird und die Lagerschale (1) axial durchdringt.

4. Verfahren nach einem der Ansprüche 1 bis 3, **dadurch gekennzeichnet, dass** die magnetostriktive Wirkung, d. h. eine Änderung des magnetischen Flusses, zyklisch auf die Lagerschale (1) aufgebracht wird und dass damit eine zyklische Verstellung des Umfanges der Lagerschale (1) bzw. eine Vibration in das Lager eingebracht wird.

5. Vorrichtung zur Anpassung des Lagerspiels bei einem Keramik-Hybrid-Lager mit Wälzkörpern (2) in Form von Kugeln oder Rollen aus einer Keramik und mit einer äußeren (1) und einer inneren (2) Lagerschale aus ferromagnetischem Material, wobei die Vorrichtung die äußere Lagerschale (1) umfasst,
**dadurch gekennzeichnet, dass**
die Vorrichtung ferner eine Spule (4) umfasst; und
dass die äußere Lagerschale (1) und die Spule (4) derart ausgebildet sind, dass in eine Außenseite der äußeren Lagerschale (1) ein magnetischer Fluss einleitbar und an der gegenüberliegenden Außenseite der äußeren Lagerschale (1) wieder ableitbar ist, so dass in der äußeren Lagerschale (1) ein magnetisches Feld (B) und ein zugehöriger magnetischer Fluss (7, 8; 14) erzeugbar sind, und
dass aufgrund der resultierenden magnetostriktiven Wirkung durch eine Änderung des magnetischen Flusses (7, 8; 14) eine Verformung der Lagerschale (1) im Sinne einer Verkleinerung oder Vergrößerung des Umfanges der Lagerschale (1) herbeiführbar ist.

6. Vorrichtung nach Anspruch 5, wobei die äußere Lagerschale (1) und die Spule (4) derart ausgebildet sind, dass der magnetische Fluss (7, 8) radial zur Lagerschale (1) einleitbar ist, so dass die Lagerschale (1) vom magnetischen Fluss (7, 8) von zwei Seiten her in Umfangsrichtung umschließbar ist.

7. Vorrichtung nach Anspruch 5, wobei die äußere Lagerschale (1) und die Spule (4) derart ausgebildet sind, dass der magnetische Fluss (14) axial zur Lagerschale (1) einleitbar ist, so dass die Lagerschale (1) vom magnetischen Fluss (14) axial durchdringbar ist.

8. Vorrichtung nach einem der Ansprüche 5 bis 7, wobei die magnetostriktive Wirkung, d. h. eine Änderung des magnetischen Flusses (7, 8; 14), zyklisch auf die Lagerschale (1) aufbringbar ist und damit eine zyklische Verstellung des Umfanges der Lagerschale (1) bzw. eine Vibration in das Lager einbringbar ist.

## Claims

1. Method for adjusting the bearing clearance in a ceramic hybrid bearing comprising rolling elements (2) in the form of balls or rollers made of a ceramic material, and comprising an external (1) and an internal (3) bearing shell made of a ferromagnetic material,
**characterized in that**
a magnetic flux is induced into an external side of the stationary non-rotating bearing shell (1) and is discharged again at the opposite external side of the bearing shell (1), wherein a magnetic field and a corresponding magnetic flux are generated, and
**in that**, due to the resulting magnetostrictive effect, a deformation of the bearing shell (1) in the sense of a reduction or an enlargement of the diameter of the bearing shell (1) is caused by means of the modification of the magnetic flux.

2. Method according to claim 1, **characterized in that** the magnetic flux is induced radially with respect to the bearing shell (1) and encloses the bearing shell (1) from two sides in the circumferential direction.

3. Method according to claim 1, **characterized in that** the magnetic flux is induced axially with respect to the bearing shell (1) and penetrates the bearing shell (1) axially.

4. Method according to one of the claims 1 to 3, **characterized in that** the magnetostrictive effect, i. e. the modification of the magnetic flux, is applied to the bearing shell (1) in a cyclic manner and **in that** a cyclic adjustment of the circumference of the bearing shell (1) or a vibration is introduced into the bearing in this way.

5. Device for adjusting the bearing clearance in a ceramic hybrid bearing comprising rolling elements (2) in the form of balls or rollers made of a ceramic material and comprising an external (1) and an internal (2) bearing shell made of a ferromagnetic material, wherein the device comprises the external bearing shell (1),
**characterized in that**
the device further comprises a coil (4); and
**in that** the external bearing shell (1) and the coil (4) are configured in such a manner that a magnetic flux can be induced into an external side of the external bearing shell (1) and discharged again at the opposite external side of the external bearing shell (1), so that a magnetic field (B) and a corresponding magnetic flux (7, 8; 14) can be generated in the external bearing shell (1), and
that due to the resulting magnetostrictive effect, a deformation of the bearing shell (1) in the sense of a reduction or an enlargement of the diameter of the bearing shell (1) can be caused by means of modification of the magnetic flux (7, 8; 14).

6. Device according to claim 5, wherein the external bearing shell (1) and the coil (4) are configured in such a manner that the magnetic flux (7, 8) can be induced radially with respect to the bearing shell (1), so that the bearing shell (1) can be enclosed by the magnetic flux (7, 8) from two sides in the circumferential direction.

7. Device according to claim 5, wherein the external bearing shell (1) and the coil (4) are configured in such a manner that the magnetic flux (14) can be induced axially with respect to the bearing shell (1), so that the bearing shell (1) can be axially penetrated by the magnetic flux (14).

8. Device according to one of the claims 5 to 7, wherein the magnetostrictive effect, i. e. the modification of the magnetic flux (7, 8; 14), is applied cyclically to the bearing shell (1), and wherein a cyclic adjustment of the circumference of the bearing shell (1) or a vibration can be introduced into the bearing in this way.

## Revendications

1. Procédé pour l'ajustement du jeu d'un palier céramique hybride comprenant des organes de roulement (2) en forme de billes ou de rouleaux réalisés en céramique, ainsi qu'un coussinet externe (1) et un coussinet interne (3) réalisés en matériau ferromagnétique,
**caractérisé en ce que**
un flux magnétique est introduit dans un côté externe du coussinet (1) fixe et non rotatif et de nouveau évacué du côté externe opposé du coussinet (1) en formant un champ magnétique et un flux magnétique associé, et que
en raison de l'effet magnétostrictif qui en résulte, il s'ensuit, sous l'effet d'une modification du flux magnétique, une déformation du coussinet (1) dans le sens d'une réduction ou d'un accroissement de l'étendue du coussinet (1).

2. Procédé selon la revendication 1, **caractérisé en ce que** le flux magnétique est introduit radialement dans le coussinet (1) et enveloppe le coussinet (1) par les deux côtés, dans le sens périphérique.

3. Procédé selon la revendication 1, **caractérisé en ce que** le flux magnétique est introduit axialement dans le coussinet (1) et pénètre le coussinet (1) axialement.

4. Procédé selon l'une des revendications 1 à 3, **caractérisé en ce que** l'effet magnétostrictif, c.-à-d. la modification du flux magnétique, est appliqué de façon cyclique sur le coussinet (1), entraînant ainsi un ajustement cyclique de l'étendue du coussinet (1) ou une vibration dans le palier.

5. Dispositif pour l'ajustement du jeu d'un palier céramique hybride comprenant des organes de roulement (2) en forme de billes ou de rouleaux réalisés en céramique, ainsi qu'un coussinet externe (1) et un coussinet interne (2) réalisés en matériau ferromagnétique, le dispositif comprenant le coussinet externe (1),
**caractérisé en ce que**
le dispositif comprend en outre une bobine (4) ; et
que le coussinet externe (1) et la bobine (4) sont configurés de sorte que
un flux magnétique puisse être introduit dans un côté externe du coussinet externe (1) et de nouveau évacué du côté externe opposé du coussinet externe (1) de façon à être en mesure de produire un champ magnétique (B) et un flux magnétique associé (7, 8 ; 14) dans le coussinet externe (1) et que
en raison de l'effet magnétostrictif qui en résulte, puisse s'ensuivre, sous l'effet d'une modification du flux magnétique (7, 8 ; 14), une déformation du coussinet (1) dans le sens d'une réduction ou d'un accroissement de l'étendue du coussinet (1).

6. Dispositif selon la revendication 5, le coussinet externe (1) et le flux magnétique (4) étant configurés de sorte que le flux magnétique (7, 8) puisse être introduit radialement dans le coussinet (1) de façon à ce que le coussinet (1) puisse être enveloppé par le flux magnétique (7, 8) par les deux côtés, dans le sens périphérique.

7. Dispositif selon la revendication 5, le coussinet externe (1) et le flux magnétique (4) étant configurés de sorte que le flux magnétique (14) puisse être introduit radialement dans le coussinet (1) de sorte que le coussinet (1) soit traversé radialement par le flux magnétique (14).

8. Dispositif selon l'une des revendications 5 à 7, l'effet magnétostrictif, c.-à-d. la modification du flux magnétique (7, 8 ; 14), pouvant être appliqué de façon cyclique sur le coussinet (1), pouvant ainsi entraîner un ajustement cyclique de l'étendue du coussinet (1) ou une vibration dans le palier.
